# EUROPÄISCHE PATENTANMELDUNG

(11) **EP 4 759 396 A1**
(43) Veröffentlichungstag der Anmeldung: **17.06.2026**
(21) Anmeldenummer: 25220903.6
(22) Anmeldetag: 04.12.2025
(51) Int. Cl.: B01D 46/24, B01D 46/71

(54) **BAUTEIL FÜR EINE FILTEREINHEIT, FILTEREINHEIT SOWIE EIN LUFTREINIGUNGSSYSTEM**

(30) Priorität: 11.12.2024 DE 102024137231
(71) Anmelder: Carl Freudenberg KG, 69469 Weinheim (DE)
(72) Erfinder: Kluck, Dr. Stefan, 77836 Rheinmünster (DE); Schumacher, Sascha, 69483 Wald-Michelbach (DE)

(57) **Zusammenfassung**

Die Erfindung betrifft ein Bauteil (10) für eine Filtereinheit (100) aufweisend:
ein Düsenelement (12), welches einen ersten Durchmesser (14) aufweist, welcher der Filtereinheit (100) zugewandt ist, wobei das Düsenelement (12) einen zweiten Durchmesser (16) aufweist, wobei der zweite Durchmesser (16) größer ist als der erste Durchmesser (14), sodass ein Strömungswiderstand eines Luftstroms aus der Filtereinheit (100) durch das Düsenelement (12) verringert wird,
ein Luftleitelement (18), welches dazu eingerichtet ist, einen Luftimpuls in die Filtereinheit (100) zumindest teilweise zu beschleunigen, um eine Abreinigungsleistung in der Filtereinheit (100) zu erhöhen.

## Beschreibung

Die vorliegende Erfindung betrifft ein Bauteil für eine Filtereinheit, eine Filtereinheit sowie ein Luftreinigungssystem.

Derzeit besteht eine Vielzahl von unterschiedlichen Lösungen zur Ausgestaltung von luftführenden Bauteilen an Filterbaugruppen. Durch die zunehmende Konzeptvielfalt von Luftfiltern im Bereich von Luftreinigungssystemen als auch die erhöhten Qualitäts- und Leistungsanforderungen steigt kontinuierlich der Bedarf an innovativen und robusten Lösungen zur energieeffizienten Luftreinigung.

### Offenbarung der Erfindung

Mit Ausführungsformen der Erfindung kann vorteilhafterweise ein verbessertes Bauteil für eine Filtereinheit bereitgestellt werden. Die Erfindung ist in den unabhängigen Ansprüchen definiert. Vorteilhafte Weiterbildungen der Erfindung ergeben sich aus den abhängigen Ansprüchen und der nachfolgenden Beschreibung.

Ein Vorteil des Bauteils mit den Merkmalen des Anspruchs 1 besteht darin, dass durch die Beschleunigung des Luftimpulses die Reinigungsleistung verbessert werden kann. Dies liegt daran, dass der Luftimpuls in entgegengesetzter Richtung zum Luftstrom Partikel oder Ähnliches, die sich im Filterelement abgesetzt haben, effektiv entfernen kann. Durch die Beschleunigung des Luftimpulses kann dieser Effekt verstärkt werden. Ein weiterer Vorteil der Erfindung ist, dass das Bauteil an bestehende Filtereinheiten angebracht bzw. nachgerüstet werden kann und diese somit mit einem überschaubaren Aufwand modifiziert werden können, um so längere Standzeiten zu vermeiden und niedrige Druckverluste zu erzielen. Zudem kann eine bessere Abreinigung bei gleichzeitig niedrigen Druckverlusten im Normalbetrieb entstehen, sodass die Lebensdauer der Filtereinheit ansteigen kann, sodass die Gesamtkosten für den Betrieb der Filtereinheit sinken können.

Dies wird erfindungsgemäß dadurch erreicht, dass das Bauteil für eine Filtereinheit ein Düsenelement aufweist, welches einen ersten Durchmesser aufweist, welcher der Filtereinheit zugewandt ist, wobei das Düsenelement einen zweiten Durchmesser aufweist, wobei der zweite Durchmesser größer ist als der erste Durchmesser, sodass ein Strömungswiderstand eines Luftstroms aus der Filtereinheit durch das Düsenelement verringert wird. Ferner weist das Bauteil ein Luftleitelement auf, welches dazu eingerichtet ist, einen Luftimpuls in die Filtereinheit zumindest teilweise zu beschleunigen, um eine Abreinigungsleistung der Filtereinheit zu erhöhen.

In anderen Worten strömt der Luftstrom durch ein Filterelement und entlang einer ersten Richtung durch das Bauteil, wobei in der ersten Richtung der Strömungswiderstand mittels des Düsenelementes reduziert wird. Weiter bevorzugt kann mittels eines Luftimpulses in eine zweite Richtung, welche im Wesentlichen entgegengesetzt zur ersten Richtung angeordnet ist, das Filterelement der Filtereinheit aufgereinigt werden, wobei der Luftimpuls durch das Luftleitelement beschleunigt werden kann, um somit eine Abreinigungsleistung der Filtereinheit weiter zu erhöhen. Bevorzugt kann ein statischer Druck am Düseneintritt so abgesenkt werden, dass eine maximale Menge sekundärer Luft eingesaut wird, um die Abreinigungsleistung der Filtereinheit verbessern zu können. Beispielsweise kann Luft durch das Filterelement strömen und über das Bauteil das Innere des Filters verlassen. Bei diesem Verlassen durch das Bauteil können Energieverluste maßgeblich durch Wirbelbildung am Austritt entstehen. Durch das Abstimmen des zweiten Durchmessers auf den ersten Durchmesser des Bauteils kann die Strömung besser der Geometrie folgen, sodass der Auslassdurchmesser bei gegebenem Volumenstrom größer wird und somit die Austrittsgeschwindigkeit sinkt, sodass ein geringerer Energieverlust erreicht werden kann. Bspw. kann der erste Durchmesser an einem Ende des Bauteils angeordnet sein, welches der Filtereinheit zugewandt ist und der zweite Durchmesser kann an einem gegenüberliegenden Ende des Bauteils angeordnet sein. Ferner ist dabei das Luftleitelement des Bauteils derart ausgestaltet, dass die Abreinigungsleistung im Falle des Luftimpulses ebenfalls verstärkt wird. Die Aufweitung zur Verbesserung des Strömungswiderstandes des Luftstroms durch das Bauteil kann dazu führen, dass ein größerer Teil des einwirkenden Freistrahles, welcher den Luftimpuls bereitstellen kann, eingefangen wird. Durch das Einströmen in das Düsenelement kann dieser beschleunigt werden. Dabei kann insbesondere das Luftleitelement im Luftimpuls angeordnet sein, sodass die Strömung weiter beschleunigt werden kann. Weiter bevorzugt kann das Bauteil einteilig bspw. mittels Kunststoffspritzgießen hergestellt werden, sodass das Düsenelement und das Luftleitelement bei der Urformung des Bauteils ausgebildet werden.

Die Unteransprüche zeigen bevorzugt Weiterbildungen der Erfindung.

Weiter bevorzugt teilt das Luftleitelement das Düsenelement in einen ersten Bereich zwischen dem Düsenelement und dem Luftleitelement und in einen zweiten Bereich innerhalb des Luftleitelements, wobei das Luftleitelement dazu eingerichtet ist, den Luftimpuls im zweiten Bereich zu beschleunigen, wobei das Düsenelement dazu eingerichtet ist, im ersten Bereich basierend auf dem beschleunigten Luftimpuls Umgebungsluft anzusaugen, um die Abreinigungsleistung der Filtereinheit weiter zu erhöhen.

Ein Vorteil dieser Ausführungsform ist, dass durch die Beschleunigung des Luftimpulses und dem dadurch abgesenkten statischen Druck eine Sekundärströmung im ersten Bereich entsteht, sodass zusätzliche Luft in das Innere der Filtereinheit eingebracht werden kann, um somit weiter die Abreinigungsleistung der Filtereinheit zu erhöhen.

Weiter bevorzugt weist das Düsenelement in Abhängigkeit des ersten Durchmessers eine erste Lüftungsfläche auf, wobei das Düsenelement in Abhängigkeit des zweiten Durchmessers eine zweite Lüftungsfläche aufweist, wobei das Luftleitelement eine dritte Lüftungsfläche aufweist, welche auf einer der Filtereinheit abgewandten Seite des Luftleitelements angeordnet ist, wobei eine Kombination aus der zweiten Lüftungsfläche und der dritten Lüftungsfläche größer ist als die erste Lüftungsfläche.

Ein Vorteil dieser Ausführungsform ist, dass, obwohl die Lüftungsfläche im Düsenelement sich durch den Einbau des Luftleitelements als auch möglicher Stege reduziert, durch das Hinzufügen der dritten Lüftungsfläche der Volumenstrom aus der Filtereinheit durch das Bauteil nicht behindert wird.

Weiter bevorzugt ist die dritte Lüftungsfläche zu der zweiten Lüftungsfläche entlang einer Rotationsachse des Düsenelements versetzt, um eine Fläche der Kombination zu vergrößern.

Ein Vorteil dieser Ausführungsform ist, dass die Erstreckungsbreite des Bauteils nicht zunehmen muss, um die Kombination aus der zweiten und dritten Lüftungsfläche zu erhöhen, indem die dritte Lüftungsfläche zur zweiten Lüftungsfläche entlang der Rotationsachse versetzt wird.

Weiter bevorzugt ist ein Verhältnis zwischen der Kombination aus der zweiten Lüftungsfläche und der dritten Lüftungsfläche zu der ersten Lüftungsfläche dazu eingerichtet, einen Strömungswiderstand eines Luftstroms aus der Filtereinheit zu reduzieren.

Ein Vorteil dieser Ausführungsform ist, dass das Verhältnis derart gewählt werden kann, dass der Bauraum für das Bauteil klein bleibt, aber gleichzeitig der Strömungswiderstand gering bleibt, um somit die Kombination zur ersten Lüftungsfläche innerhalb eines optimalen Verhältnisses zu halten.

Bevorzugt weist das Luftleitelement eine vierte Lüftungsfläche auf, wobei die vierte Lüftungsfläche der Filtereinheit zugewandt ist, wobei die vierte Lüftungsfläche im Wesentlichen kleiner als die dritte Lüftungsfläche ist, sodass der Luftimpuls durch das Luftleitelement beschleunigt wird.

Ein Vorteil dieser Ausführungsform ist, dass durch die zulaufende Kontur des Luftleitelements der Luftimpuls in die Mitte des Filterelements fokussiert werden kann, um somit eine gleichmäßige Abreinigungsleistung im Filterelement bewirken zu können.

Weiter bevorzugt weist das Bauteil zumindest ein Clipelement auf, wobei das Clipelement dazu eingerichtet ist, zumindest teilweise in die Filtereinheit einzugreifen, um das Bauteil an der Filtereinheit zu sichern.

Ein Vorteil dieser Ausführungsform ist, dass mittels des Clipelementes das Bauteil einfach an bestehende Systeme nachgerüstet werden kann. Weiter bevorzugt kann das Clipelement einen strömungsoptimierten Querschnitt oder Form aufweisen, sodass durch die Anordnung des Clips die Führung des Luftimpulses und/oder des Luftstroms innerhalb des Bauteils weiter verbessert werden kann. Dabei kann insbesondere durch die Ausprägung des Clipelements die Ablösung der Strömung an den Kanten des Bauteils weiter reduziert werden. Dies reduziert ebenfalls integralen Druckverlust bzw. erhöht dadurch die potenzielle Lebensdauer des Filters.

Vorzugsweise ist das Luftleitelement dazu eingerichtet, den Luftimpuls ausgehend von einer Ventilanordnung im Wesentlichen vollständig aufzunehmen.

Ein Vorteil dieser Ausführungsform kann sein, dass mittels des Luftleitelements ein Freistrahl in Form eines Luftimpulses ausgehend von der Ventilanordnung im Wesentlichen vollständig aufgenommen wird, indem das Luftleitelement zumindest auf der Filtereinheit abgewandten Seite derart ausgestaltet ist, den Freistrahl aufzufangen.

Weiter bevorzugt ist das Luftleitelement mittels zumindest eines Steges an dem Düsenelement angeordnet.

Ein Vorteil dieser Ausführungsform ist, dass das Luftleitelement in einer vorbestimmten Position innerhalb des Düsenelements gehalten werden kann, um somit weiter die Luftwiderstände zu reduzieren.

Weiter bevorzugt ist der Steg dazu eingerichtet, eine Verwirbelung des Luftstroms innerhalb des Düsenelements zu reduzieren.

Ein Vorteil dieser Ausführungsform ist, dass eine Querschnittsfläche des Steges oder Ähnliches derart angepasst werden kann, um den Luftwiderstand innerhalb des Düsenelements weiter zu reduzieren, um somit Verwirbelungen oder Ähnlichem vorzubeugen.

Weiter bevorzugt weist das Bauteil einen vorbestimmten Bereich auf mit einer Vielzahl von Profilen in einem vorbestimmten Muster, wobei die Vielzahl von Profilen dazu eingerichtet ist, eine turbulente Grenzschicht auszubilden, um einen Strömungswiderstand des vorbestimmten Bereichs zu reduzieren.

Ein Vorteil dieser Ausführungsform ist, dass mithilfe der Vielzahl von Ausnehmungen eine turbulente Grenzschicht zwischen dem Bauteil und dem Luftstrom innerhalb des Düsenelements ausgebildet werden kann, um somit die Luftwiderstände weiter zu erhöhen bzw. dafür zu sorgen, dass der Luftstrom länger an der Oberfläche des Düsenelements haften bleibt.

Weiter bevorzugt ist der vorbestimmte Bereich zumindest teilweise auf dem Düsenelement, dem Luftleitelement, dem Clipelement und/oder dem Steg angeordnet.

Ein Vorteil dieser Ausführungsform ist, dass in Abhängigkeit des jeweiligen Bereiches, wie beispielsweise dem Düsenelement, die Vielzahl von Profilen entsprechend angepasst werden kann, um somit weiter den Strömungswiderstand zu reduzieren.

Weiter bevorzugt weist die Vielzahl von Profilen jeweils eine im Wesentlichen kugelförmige Ausnehmung auf, wobei die Vielzahl von Ausnehmungen in Zusammenwirkung mit dem vorbestimmten Muster dazu eingerichtet ist, eine Golfballstruktur auszubilden.

Ein weiterer Aspekt der Erfindung betrifft eine Filtereinheit, welche ein Bauteil wie voranstehend und nachfolgend beschrieben und ein Filterelement aufweist, welches dazu eingerichtet ist, eine vorbestimmte Auswahl von Elementen aus einem Luftstrom zu filtern, wobei das Bauteil dazu eingerichtet ist, einen Strömungswiderstand des Luftstromes durch die Filtereinheit zu reduzieren, wobei das Bauteil dazu eingerichtet ist, einen Luftimpuls auf das Bauteil zu beschleunigen, um das Filterelement zu reinigen.

Ein Vorteil dieser Ausführungsform ist, dass durch die verbesserte Reinigungsleistung des Filterelements die maximale Betriebsdauer des Filterelements in der Filtereinheit weiter erhöht werden kann.

Ein weiterer Aspekt der Erfindung betrifft ein Luftreinigungssystem, welches ein Bauteil wie voranstehend und nachfolgend beschrieben und/oder eine Filtereinheit wie voranstehend und nachfolgend beschrieben aufweist.

Ferner ist darauf hinzuweisen, dass der Begriff der Einheit vorliegend jeweils breit zu verstehen ist und sowohl eine einteilige Ausbildung als auch eine mehrteilige Ausbildung der jeweiligen Einheiten umfasst, wobei die jeweiligen Teileinheiten nicht auf einer Position der Filtereinheit oder des Luftreinigungssystems vorgesehen sein müssen, sondern auch verteilt an der Filtereinheit oder am Luftreinigungssystem vorgesehen sein können.

Sämtliche Offenbarungen, welche voranstehend und nachfolgend in Bezug auf einen Aspekt der Erfindung beschrieben sind, gelten gleichermaßen für alle weiteren Aspekte der Erfindung.

Nachfolgend werden Ausführungsbeispiele der Erfindung unter Bezugnahme auf die begleitenden Zeichnungen im Detail beschrieben. Inhalt der Zeichnungen ist:
Fig. 1 und 2 ein Bauteil gemäß einer Ausführungsform.
Fig. 3 eine Filtereinheit gemäß einer Ausführungsform.
Fig. 4 ein Bauteil gemäß einer Ausführungsform.
Fig. 5 ein Luftreinigungssystem gemäß einer Ausführungsform.

### Ausführungsformen der Erfindung

Die Figuren sind lediglich schematisch und nicht maßstabsgetreu. In den Figuren können gleiche, gleichwirkende oder ähnliche Elemente mit den gleichen Bezugszeichen verwendet werden.

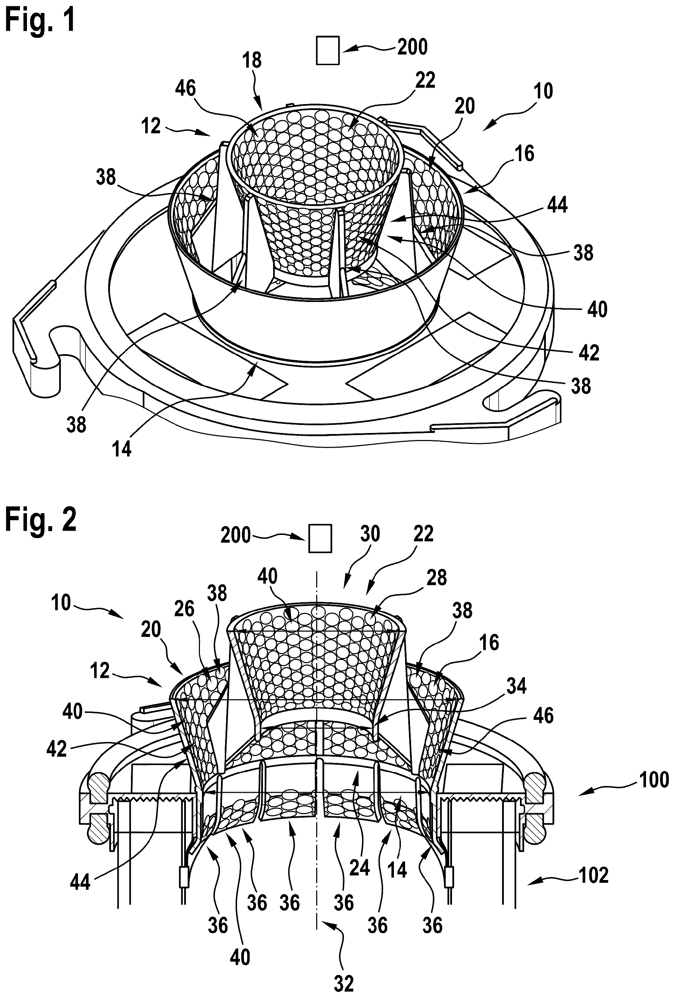

Fig. 1 zeigt ein Bauteil 10 für eine Filtereinheit 100, welches ein Düsenelement 12 aufweist, welches einen ersten Durchmesser 14 aufweist, welcher der Filtereinheit 100 zugewandt ist, wobei das Düsenelement 12 einen zweiten Durchmesser 16 aufweist, wobei der zweite Durchmesser 16 größer ist als der erste Durchmesser 14, sodass ein Strömungswiderstand eines Luftstroms aus der Filtereinheit 100 durch das Düsenelement 12 verringert wird. Ferner weist das Bauteil 10 ein Luftleitelement 18 auf, welches dazu eingerichtet ist, einen Luftimpuls in die Filtereinheit 100 zumindest teilweise zu beschleunigen, um eine Abreinigungsleistung der Filtereinheit 100 zu erhöhen.

Wie ferner in der Fig. 1 zu erkennen ist, kann eine Ventilanordnung 200 über dem Bauteil 10 angeordnet werden. Die Ventilanordnung 200 kann einen Luftimpuls aussenden, welcher mittels des Luftleitelements 18 beschleunigt wird. Ferner kann das Luftleitelement 18 das Düsenelement 12 in einen ersten Bereich 20 und einen zweiten Bereich 22 teilen. Vorzugsweise bildet sich der erste Bereich 20 zwischen dem Luftleitelement 18 und dem Düsenelement 12. Der zweite Bereich 22 ist bevorzugt innerhalb des Luftleitelements 18 angeordnet. Bevorzugt kann das Luftleitelement 18 mit einer Vielzahl von Stegen 38 am Düsenelement 12 oder dem Bauteil 10 befestigt sein. Vorzugsweise weist das Luftleitelement 18 und die Innenseite des Düsenelements 12 eine Vielzahl von Profilen 42 in einem vorbestimmten Bereich 40 auf, die in einem vorbestimmten Muster 44 angeordnet ist, um somit beispielsweise eine Golfballstruktur ausbilden zu können.

Fig. 2 zeigt ein Bauteil 10 gemäß einer Ausführungsform. In der Fig. 2 wird das Bauteil 10 in einer Schnittansicht dargestellt, um die Wirkungsweise des Bauteils 10 weiter zu verdeutlichen. Das Bauteil 10 weist ein Düsenelement 12 auf, welches einen ersten Durchmesser 14 und einen zweiten Durchmesser 16 umfasst. Dabei ist der zweite Durchmesser 16 größer als der erste Durchmesser 14. Innerhalb des Düsenelements 12 ist das Luftleitelement 18 zumindest teilweise angeordnet. Das Luftleitelement 18 teilt vorzugsweise das Düsenelement 12 in einen ersten Bereich 20 und einen zweiten Bereich 22. Der erste Bereich 20 ist bevorzugt zwischen dem Düsenelement 12 und dem Luftleitelement 18 angeordnet. Der zweite Bereich 22 ist innerhalb des Luftleitelements 18 angeordnet. Bevorzugt ist der zweite Bereich 22 des Luftleitelements 18 in der Art ausgestaltet, dass dieser den Luftimpuls beschleunigen kann, bspw. in dem das Luftleitelement 18 einen Trichter ausbildet. Der aus dem Luftleitelement 18 austretende Luftimpuls sorgt für zumindest einen zeitweisen Unterdruck im ersten Bereich 20, sodass der Luftimpuls, welcher beschleunigt wurde, Umgebungsluft durch den ersten Bereich 20 in das Filterelement 102 der Filtereinheit einbringen kann.

Bevorzugt bildet der erste Durchmesser 14 des Bauteils 10, wie in der Fig. 2 dargestellt, eine erste Lüftungsfläche 24 aus. Die wie in der Fig. 2 dargestellt, rund sein kann. Ferner bildet der zweite Durchmesser 16 eine zweite Lüftungsfläche 26 aus, welche ebenfalls rund sein kann. Bevorzugt weist das Luftleitelement 18 eine dritte Lüftungsfläche 28 auf, welche auf einer der Filtereinheit 100 abgewandten Seite 30 des Luftleitelements 18 angeordnet ist. Bevorzugt ist dabei die Kombination aus der zweiten Lüftungsfläche 26 und der dritten Lüftungsfläche 28 größer als die erste Lüftungsfläche 24.

Die Vergrößerung der Kombination zur ersten Lüftungsfläche 24 kann insbesondere mittels eines Versatzes der dritten Lüftungsfläche 28 zu der zweiten Lüftungsfläche 26 entlang einer Rotationsachse 32 des Düsenelements 12 erreicht werden.

Wie in der Fig. 2 dargestellt, ist bevorzugt ein Verhältnis zwischen der Kombination aus der zweiten Lüftungsfläche 26 und der dritten Lüftungsfläche 28 zu der ersten Lüftungsfläche 24 dazu eingerichtet, einen Strömungswiderstand eines Luftstroms aus der Filtereinheit zu reduzieren.

Vorzugsweise kann das Luftleitelement 18 eine vierte Lüftungsfläche 34 aufweisen, wobei die vierte Lüftungsfläche 34 der Filtereinheit 100 zugewandt ist, wobei die vierte Lüftungsfläche 34 im Wesentlichen kleiner als die dritte Lüftungsfläche 28 ist, sodass der Luftimpuls durch das Luftleitelement 18 beschleunigt wird. Wie in der Fig. 2 dargestellt ist, kann das Luftleitelement 18 trichterförmig ausgebildet sein, sodass die vierte Lüftungsfläche 34 größer als die dritte Lüftungsfläche 28 ist. Bevorzugt kann das Bauteil 10 eine Vielzahl von Clipelementen 36 aufweisen, um das Bauteil an der Filtereinheit 100 zu sichern. Weiter bevorzugt kann das Luftleitelement 18 in Abhängigkeit einer Ventilanordnung 200 ausgebildet werden, sodass das Luftleitelement 18 dazu eingerichtet ist, den Luftimpuls ausgehend von der Ventilanordnung 200 im Wesentlichen vollständig aufzunehmen

Weiter bevorzugt ist das Luftleitelement 18 mittels eines Steges 38 am Düsenelement 12 angeordnet, wobei der Steg 38 dazu eingerichtet ist, eine Verwirbelung des Luftstroms innerhalb des Düsenelements 12 zu reduzieren.

Weiter bevorzugt weist das Bauteil 10 einen vorbestimmten Bereich 40 auf, wobei in dem vorbestimmten Bereich 40 eine Vielzahl von Profilen 42 an einem vorbestimmten Muster 44 angeordnet ist, um eine turbulente Grenzschicht ausbilden zu können, sodass der Strömungswiderstand des vorbestimmten Bereichs 40 reduziert werden kann.

Weiter bevorzugt ist der vorbestimmte Bereich 40 zumindest teilweise auf dem Düsenelement 12, dem Luftleitelement 18 in dem Clipelement 36 und/oder dem Steg 38 angeordnet. Wie in der Fig. 2 dargestellt ist, weist bevorzugt sowohl das Düsenelement 12, die Clipelemente 36 als auch die Innen- und Außenseite des Luftleitelements 18 den vorbestimmten Bereich 40 mit der Vielzahl von Profilen 42 auf.

Weiter bevorzugt ist, wie in der Fig. 2 dargestellt, die Vielzahl von Profilen 42 als im Wesentlichen kugelförmige Ausnehmungen 46 ausgebildet, um somit in Zusammenwirkung mit dem vorbestimmten Muster 44 eine Golfballstruktur auszubilden.

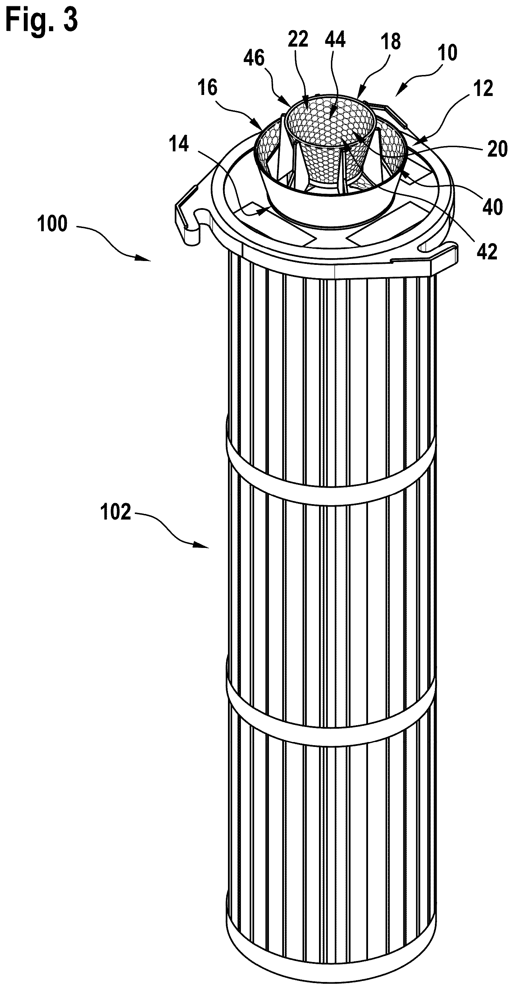

Fig. 3 zeigt eine Filtereinheit 100 gemäß einer Ausführungsform. Die Filtereinheit 100 weist ein Bauteil 10 wie voranstehend und nachfolgend beschrieben auf und ein Filterelement 102, welches dazu eingerichtet ist, eine vorbestimmte Auswahl an Elementen aus einem Luftstrom zu filtern, wobei das Bauteil 10 dazu eingerichtet ist, einen Strömungswiderstand des Luftstroms durch die Filtereinheit 100 zu reduzieren, wobei das Bauteil 10 dazu eingerichtet ist, einen Luftimpuls auf das Bauteil 10 zu beschleunigen, um das Filterelement 102 zu reinigen.

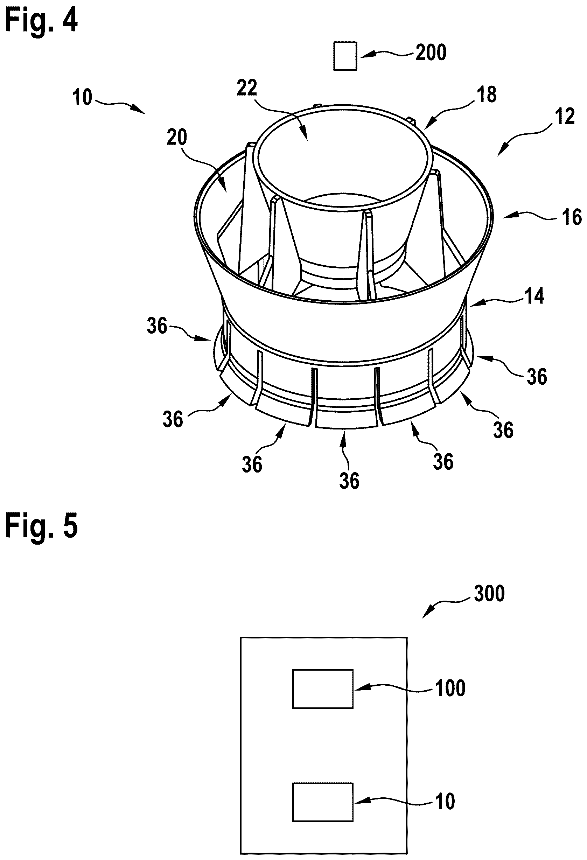

Fig. 4 zeigt ein Bauteil 10 gemäß einer Ausführungsform. Das Bauteil 10 weist ein Düsenelement 12 auf sowie ein Luftleitelement 18, welches zumindest teilweise innerhalb des Düsenelements 12 angeordnet ist. Bevorzugt kann ein Luftimpuls ausgehend von einer Ventilanordnung 200 mittels des Luftleitelements 18 beschleunigt werden, um eine Abreinigungsleistung in einer Filtereinheit 100 zu verbessern. Bevorzugt kann das Luftleitelement 18 einen ersten Bereich 20 und einen zweiten Bereich 22 ausbilden, wobei der erste Bereich 20 zwischen dem Düsenelement 12 und dem Luftleitelement 18 und der zweite Bereich 22 innerhalb des Luftleitelementes angeordnet ist. Bevorzugt kann der Luftimpuls ausgehend von der Ventilanordnung 200 in den zweiten Bereich 22 im Wesentlichen vollständig eingebracht werden, um somit diesen weiter zu beschleunigen. Durch die Beschleunigung des Luftimpulses kann Umgebungsluft durch den ersten Bereich 20 angesaugt werden. Weiter bevorzugt können die Clipelemente 36 des Bauteils 10 zumindest teilweise in eine Filtereinheit 100 eingreifen, sodass das Bauteil 10 einfach nachrüstbar ist.

Fig. 5 zeigt ein Luftreinigungssystem 300 gemäß einer Ausführungsform. Das Luftreinigungssystem 300 weist bevorzugt ein Bauteil 10 wie voranstehend und nachfolgend beschrieben auf und/oder eine Filtereinheit 100 wie voranstehend und nachfolgend beschrieben.

## Patentansprüche

1. Bauteil (10) für eine Filtereinheit (100) aufweisend:
ein Düsenelement (12), welches einen ersten Durchmesser (14) aufweist, welcher der Filtereinheit (100) zugewandt ist, wobei das Düsenelement (12) einen zweiten Durchmesser (16) aufweist, wobei der zweite Durchmesser (16) größer ist als der erste Durchmesser (14), sodass ein Strömungswiderstand eines Luftstroms aus der Filtereinheit (100) durch das Düsenelement (12) verringert wird,
ein Luftleitelement (18), welches dazu eingerichtet ist, einen Luftimpuls in die Filtereinheit (100) zumindest teilweise zu beschleunigen, um eine Abreinigungsleistung in der Filtereinheit (100) zu erhöhen.

2. Bauteil (10) nach Anspruch 1, wobei das Luftleitelement (18) das Düsenelement (12) in einen ersten Bereich (20) zwischen dem Düsenelement (12) und dem Luftleitelement (18) und einen zweiten Bereich (22) innerhalb des Luftleitelements (18) teilt, wobei das Luftleitelement (18) dazu eingerichtet ist, den Luftimpuls im zweiten Bereich (22) zu beschleunigen, wobei das Düsenelement (12) dazu eingerichtet ist, im ersten Bereich (20) basierend auf dem beschleunigten Luftimpuls Umgebungslust anzusaugen, um die Abreinigungsleistung der Filtereinheit (100) weiter zu erhöhen.

3. Bauteil (10) nach einem der vorherigen Ansprüche, wobei das Düsenelement (12) in Abhängigkeit des ersten Durchmessers (14) eine erste Lüftungsfläche (24) aufweist, wobei das Düsenelement (12) in Abhängigkeit des zweiten Durchmessers (16) eine zweite Lüftungsfläche (26) aufweist, wobei das Luftleitelement (18) eine dritte Lüftungsfläche (28) aufweist, welche auf einer der Filtereinheit (100) abgewandten Seite (30) des Luftleitelements (18) angeordnet ist, wobei eine Kombination aus der zweiten Lüftungsfläche (26) und der dritten Lüftungsfläche (28) größer ist als die erste Lüftungsfläche (24).

4. Bauteil (10) nach Anspruch 3, wobei die dritte Lüftungsfläche (28) zu der zweiten Lüftungsfläche (26) entlang einer Rotationsachse (32) des Düsenelements (12) versetzt ist, um eine Fläche der Kombination zu vergrößern.

5. Bauteil (10) nach einem der Ansprüche 3 bis 4, wobei ein Verhältnis zwischen der Kombination aus der zweiten Lüftungsfläche (26) und der dritten Lüftungsfläche (28) zu der ersten Lüftungsfläche (24) dazu eingerichtet ist, einen Strömungswiderstand eines Luftstroms aus der Filtereinheit (100) zu reduzieren.

6. Bauteil (10) nach einem der Ansprüche 3 bis 5, wobei das Luftleitelement (18) eine vierte Lüftungsfläche (34) aufweist, wobei die vierte Lüftungsfläche (34) der Filtereinheit (100) zugewandt ist, wobei die vierte Lüftungsfläche (34) im Wesentlichen kleiner als die dritte Lüftungsfläche ist, sodass der Luftimpuls durch das Luftleitelement (18) beschleunigt wird.

7. Bauteil (10) nach einem der vorherigen Ansprüche, wobei das Bauteil (10) zumindest ein Clipelement (36) aufweist, wobei das Clipelement (36) dazu eingerichtet ist, zumindest teilweise in die Filtereinheit (100) einzugreifen, um das Bauteil (10) an der Filtereinheit (100) zu sichern.

8. Bauteil (10) nach einem der vorherigen Ansprüche, wobei das Luftleitelement (18) dazu eingerichtet ist, den Luftimpuls ausgehend von einer Ventilanordnung (200) im Wesentlichen vollständig aufzunehmen.

9. Bauteil (10) nach einem der vorherigen Ansprüche, wobei das Luftleitelement (18) mittels zumindest eines Steges (38) an dem Düsenelement (12) angeordnet ist.

10. Bauteil (10) nach Anspruch 9, wobei der Steg (38) dazu eingerichtet ist, eine Verwirbelung des Luftstroms innerhalb des Düsenelements (12) zu reduzieren.

11. Bauteil (10) nach einem der vorherigen Ansprüche, wobei ein vorbestimmter Bereich (40) an dem Bauteil (10) eine Vielzahl von Profilen (42) in einem vorbestimmten Muster (44) aufweist, wobei die Vielzahl von Profilen (42) dazu eingerichtet ist, eine turbulente Grenzschicht auszubilden, um einen Strömungswiderstand des vorbestimmten Bereichs (40) zu reduzieren.

12. Bauteil (10) nach einem der Ansprüche 11 und 9 oder 7, wobei der vorbestimmte Bereich zumindest teilweise auf dem Düsenelement (12), dem Luftleitelement (18), dem Clipelement (36) und/oder dem Steg (38) angeordnet ist.

13. Bauteil (10) nach einem der vorherigen Ansprüche 11 bis 12, wobei die Vielzahl von Profilen (42) jeweils eine im Wesentlichen kugelförmige Ausnehmung (46) aufweist, wobei die Vielzahl von Ausnehmungen (46) in Zusammenwirkung mit dem vorbestimmten Muster (44) dazu eingerichtet ist, eine Golfballstruktur auszubilden.

14. Filtereinheit (100) aufweisend ein Bauteil (10) nach einem der Ansprüche 1 bis 13 und ein Filterelement (102), welches dazu eingerichtet ist, eine vorbestimmte Auswahl an Elementen aus einem Luftstrom zu filtern, wobei das Bauteil (10) dazu eingerichtet ist, einen Strömungswiderstand des Luftstroms durch die Filtereinheit (100) zu reduzieren, wobei das Bauteil (10) dazu eingerichtet ist, einen Luftimpuls auf das Bauteil (10) zu beschleunigen, um das Filterelement (102) zu reinigen.

15. Luftreinigungssystem (300) aufweisend ein Bauteil (10) nach einem der Ansprüche 1 bis 13 und/oder eine Filtereinheit (100) nach Anspruch 14.
